# FASCICULE DE BREVET EUROPEEN

(11) **EP 3 100 916 B1**
(45) Date de publication et mention de la délivrance du brevet: **02.05.2018**
(21) Numéro de dépôt: 16170263.4
(22) Date de dépôt: 19.05.2016
(51) Int. Cl.: B60R 19/34

(54) **DISPOSITIF D´ABSORPTION DE CHOCS POUR STRUCTURE AVANT OU ARRIÈRE D'UN VÉHICULE ET VÉHICULE ÉQUIPÉ D'UN TEL DISPOSITIF**
STOSSABSORBIERENDE VORRICHTUNG FÜR FRONT- UND HECKSTRUKTUR EINES FAHRZEUGS, UND MIT DIESER VORRICHTUNG AUSGESTATTETES FAHRZEUG
SHOCK ABSORBER DEVICE FOR FRONT OR REAR STRUCTURE OF A VEHICLE AND VEHICLE PROVIDED WITH SUCH A DEVICE

(30) Priorité: 03.06.2015 FR 1555046
(43) Date de publication de la demande: 07.12.2016
(73) Titulaire: PSA Automobiles SA, 78300 Poissy (FR)
(72) Inventeur: PLUCHAUD, Eric, 25260 MONTENOIS (FR); DURET, Céline, 25420 DAMPIERRE SUR LE DOUBS (FR); ROGNON, Olivier, 25340 ANTEUIL (FR)

(56) Documents cités:
- EP-A1- 1 527 957
- FR-A1- 2 979 598
- KR-A- 20100 049 328
- US-A1- 2008 290 674

## Description

L'invention concerne un dispositif d'absorption de chocs pour structure avant ou arrière d'un véhicule, par exemple d'un véhicule automobile. L'invention concerne également un véhicule équipé d'un tel dispositif.

La structure avant ou arrière d'un véhicule automobile présente un brancard comportant deux longerons destinés à supporter ensemble un dispositif d'absorption de chocs comprenant une poutre de pare-chocs. Chaque longeron est généralement constitué d'une pièce en acier orientée selon l'axe longitudinal du véhicule et dont l'extrémité avant ou arrière sert de support audit dispositif de sorte à ce que la poutre soit orientée transversalement.

Dans les dispositifs d'absorption de chocs concernés par l'invention, un absorbeur de chocs, également appelé «crash box», est intercalé entre les extrémités de chaque longeron et la poutre de pare-chocs afin de protéger la structure du brancard en cas de chocs à faible vitesse. Les absorbeurs de chocs sont des pièces déformables, typiquement en aluminium, associées à la poutre transversale du pare-chocs au niveau de ses extrémités. Ils présentent généralement une partie profilée allongée dans le sens longitudinal qui se déforme par pliages successifs sous l'effet de l'effort de compression générée par le choc, selon un mode de déformation appelé « bottelage ».

Un exemple de dispositif d'absorption de chocs connu est donné par le document WO2014/207544.

Lors d'un choc frontal à très faible vitesse, la poutre de pare-chocs et les absorbeurs de chocs vont se déformer dans le domaine élastique et reprendre leur position initiale sans détérioration. Lorsque le choc se produit à plus grande vitesse, sans pour autant être très importante, par exemple de l'ordre de 10-15 km/heure, le pare-chocs et les absorbeurs de chocs subissent une déformation plastique qui permet d'absorber au moins en partie l'énergie du choc. Cette absorption d'énergie permet de préserver le reste de la structure du véhicule tant que l'on reste en dessous du seuil de réparabilité. Au-delà de ce seuil, la structure du brancard est endommagée sous l'effet du choc. On comprend qu'un tel dispositif, placé en porte à faux, doit s'écraser de manière stable pour absorber un maximum d'énergie et transmettre harmonieusement les efforts au brancard. De tels dispositifs d'absorption de chocs sont donc sensibles aux efforts de cisaillement et aux moments de flexion.

Le compartiment moteur ou de coffre à proximité du dispositif d'absorption de chocs peut être amené à accueillir de nouveaux éléments tels que par exemple un module d'entrée d'air en partie avant du véhicule. L'implantation de nouveaux éléments au sein d'une architecture déjà contrainte peut générer des problèmes d'encombrement stérique notamment en relation avec le dispositif d'absorption de chocs.

Le document EP 1 527 957 A1 décrit un dispositif d'absorption de chocs pour structure avant ou arrière de véhicule automobile comprenant une poutre de pare-chocs aux extrémités de laquelle sont fixés des absorbeurs de chocs, dispositif conforme au préambule de la revendication 1. L'invention a pour objectif d'apporter une solution à la problématique d'implantation de nouveaux éléments, en proposant un nouveau dispositif d'absorption de chocs qui facilite cette implantation tout en conservant ses propriétés d'absorption énergie en cas de choc.
A cet effet, l'invention a pour objet un dispositif d'absorption de chocs pour structure avant ou arrière de véhicule automobile comprenant une poutre de pare-chocs aux extrémités de laquelle sont fixés des absorbeurs de chocs, dispositif comprenant les caractéristiques de la revendication 1. Selon des modes particuliers de réalisation, l'invention peut comprendre l'une ou l'autre des caractéristiques suivantes, prises isolément ou selon toutes les combinaisons possibles :
- La poutre de pare-chocs et les absorbeurs de chocs comprenant chacun une face inférieure, le dispositif est remarquable en ce que la poutre de pare-chocs et les absorbeurs de chocs sont alignés selon l'axe vertical par leurs faces inférieures.
- Le dispositif d'absorption de chocs est asymétrique selon un plan horizontal.
- La hauteur de la poutre de pare-chocs est de 0.5 à 0.8 fois la hauteur des absorbeurs de chocs.
- Au moins un des absorbeurs de chocs présente à une de ses extrémités une encoche dans laquelle se loge la poutre de pare-chocs, ladite encoche étant configurée pour que l'absorbeur de chocs se superpose en partie à la poutre de pare-chocs selon l'axe vertical. De préférence tous les absorbeurs de chocs présentent une telle encoche.
- L'encoche est dimensionnée pour contenir la poutre de pare-chocs de sorte à ce que l'absorbeur de chocs se superpose en partie à la poutre de pare-chocs selon l'axe vertical sur toute la largeur de la poutre de pare-chocs.
- La paroi inférieure de la poutre de pare-chocs présente une ouverture au niveau des absorbeurs de chocs.
- La paroi inférieure de la poutre de pare-chocs présente une épaisseur inférieure à celle des autres parois.
- La poutre de pare-chocs présente deux ouvertures symétriquement disposées de part et d'autre du centre de la poutre pris selon sa longueur, entre les absorbeurs de chocs et pratiquées sur l'une des parois verticales ou sur la paroi supérieure de ladite poutre de pare-chocs, de préférence les ouvertures sont pratiquées à proximité des absorbeurs de chocs.
- Les absorbeurs de chocs présentent au moins une entaille sur leur surface.
- Le dispositif d'absorption de chocs est un dispositif d'absorption de chocs pour structure avant de véhicule automobile.
L'invention a également pour objet un véhicule remarquable en ce qu'il présente un dispositif d'absorption de chocs tels que défini ci-dessus selon toutes ses variantes.
Comme on l'aura compris à la lecture de la définition qui vient d'en être donnée, l'invention consiste à proposer une poutre de pare-chocs dont la hauteur est réduite par rapport aux poutres de l'art antérieur. Cette configuration permet de générer un espace supplémentaire pour l'insertion de nouveaux éléments tels qu'un module d'entrée d'air en partie avant du véhicule. L'espace généré est d'autant plus important lorsque la poutre est disposée décentrée par rapport aux absorbeurs, par exemple en les alignant verticalement par leur face inférieure. La capacité d'absorption d'énergie des absorbeurs n'est pas modifiée puisqu'ils conservent leur taille initiale. Selon l'invention, le dispositif est asymétrique selon un plan horizontal mais la déformation des absorbeurs est néanmoins maîtrisée. L'invention est remarquable en ce qu'elle offre la possibilité d'une déformation de la face inférieure de la poutre au niveau des absorbeurs, ce qui leur permet de s'écraser de manière stable et donc d'absorber de manière optimale l'énergie des chocs. L'invention permet également un découplage de la torsion de la poutre par des ouvertures pratiquées sur la poutre entre les absorbeurs, ce qui contribue à leur stabilité en limitant les perturbations dues au dégalbage de la poutre. Enfin, l'invention va permettre aux absorbeurs d'absorber à la fois l'énergie en provenance de la poutre de pare-chocs et celle en provenance du pare-chocs, en permettant audit absorbeur de coopérer directement avec le pare-chocs en plus de sa coopération avec la poutre de pare-chocs, par une superposition d'une partie des absorbeurs à la poutre selon un axe vertical.
L'invention sera bien comprise et d'autres aspects et avantages apparaîtront clairement à la lecture de la description qui sui donnée à titre d'exemple en référence à la planche de dessins annexée sur laquelle :
- la figure 1 est une vue en perspective vue de dessus d'un dispositif d'absorption de chocs selon l'invention ;
- la figure 2 est une vue en perspective vue de dessous d'une zone de jonction entre un absorbeur et la poutre d'un dispositif selon l'invention ;
- la figure 3 est une vue en perspective vue de dessus d'une zone de jonction entre un absorbeur et la poutre d'un dispositif selon l'invention.

Dans la description qui suit les termes « inférieur », « supérieur », « avant », « arrière » s'entendront par rapport à l'orientation générale du véhicule. Ainsi, lorsque le dispositif d'absorption de chocs est situé à l'avant d'un véhicule, la face avant de la poutre entre en contact avec le pare-chocs lors d'un choc de sorte à ce qu'elle se déforme en s'enfonçant vers l'arrière. Dans le cas où le dispositif d'absorption de chocs est disposé au niveau de la structure arrière d'un véhicule, c'est la face arrière de la poutre qui entre en contact avec le pare-chocs en cas de chocs et la déformation générée se fait en direction de l'avant du véhicule. « Inférieur » désignera une proximité au sol plus importante que « supérieur » selon l'axe vertical.

Par ailleurs, la poutre étant disposée transversalement par rapport à l'axe longitudinal du véhicule, la largeur de la poutre de pare-chocs est mesurée selon l'axe longitudinal du véhicule et sa longueur selon l'axe transversal du véhicule.

L'invention sera décrite ici en relation avec un dispositif d'absorption de chocs pour structure avant de véhicule mais sera adaptée sans peine par l'homme du métier à un dispositif d'absorption de chocs pour structure arrière de véhicule.

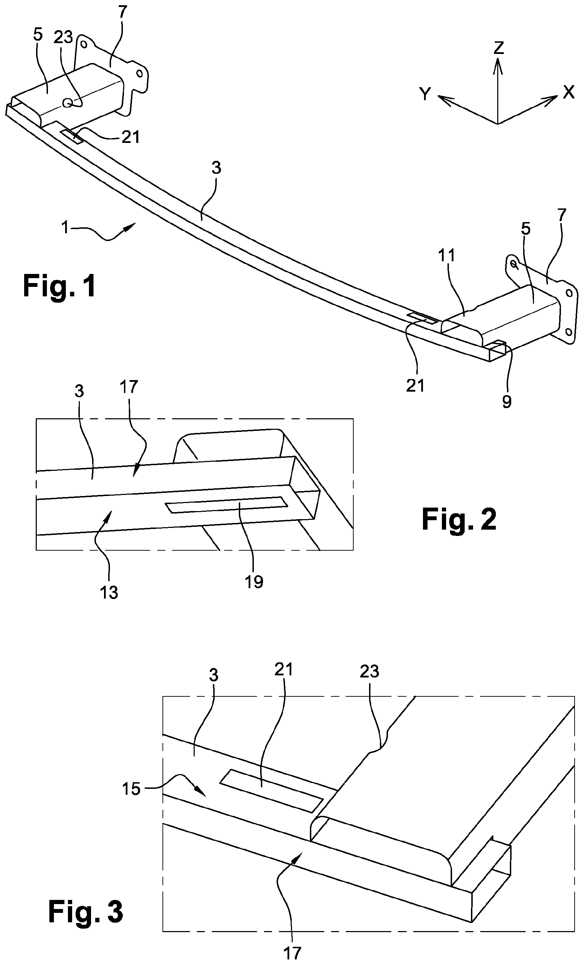

On se référera en premier lieu à la figure 1 montrant un dispositif d'absorption de chocs 1 selon l'invention. Ce dispositif 1 comprend une poutre de pare-chocs 3 (ci-après « poutre ») destinée à être placée selon l'axe transversal du véhicule et constituée par un corps creux en acier ou en aluminium. Aux extrémités de la poutre 3 sont fixés des absorbeurs de chocs 5 (ci-après « absorbeurs »). Les absorbeurs 5 sont destinés à s'intercaler entre la poutre 3 et les longerons (non représentés) du brancard du véhicule. A cet effet, ils présentent chacun une platine de fixation 7 à leur extrémité opposée à celle associée à la poutre 3. Les absorbeurs 5 sont des pièces déformables, par exemple en aluminium, destinées à se déformer par bottelage.

Selon l'invention, la poutre 3 présente une hauteur inférieure à celle des absorbeurs. Cette diminution de la hauteur de la poutre 3 par rapport aux poutres connues permet d'en diminuer l'encombrement et donc facilite l'implantation d'éléments supplémentaires à proximité de celle-ci. Par exemple, la hauteur de la poutre 3 sera de 0.5 à 0.8 fois la hauteur des absorbeurs 5. De préférence, la hauteur de la poutre 3 est la moitié de la hauteur des absorbeurs 5. La rigidité de la poutre 3 peut être conservée en jouant sur l'épaisseur de ses parois ou sur la rigidité du matériau dont elle est constituée. Son association avec des absorbeurs 5 de taille supérieure va permettre au dispositif 1 d'absorption de chocs de conserver la capacité d'absorption d'énergie nécessaire à son implantation sur un véhicule. Il offre également une grande adaptabilité au dispositif 1 d'absorption de chocs puisque son installation sur un véhicule ne nécessite pas de modification de son brancard. En effet, la jonction avec celui-ci par le biais des absorbeurs 5 est inchangée par rapport aux dispositifs antérieurs.
Selon un mode de réalisation de l'invention, la poutre 3 est en outre décentrée selon la direction verticale par rapport aux absorbeurs 5. Le dispositif d'absorption 1 est donc non symétrique selon un plan XY. De préférence, la poutre 3 et les absorbeurs 5 sont alignés selon l'axe vertical par leurs faces inférieures comme illustré dans notre exemple. De la sorte, le gain de place en partie supérieure de la poutre est maximal. Bien entendu, l'homme du métier pourra choisir d'aligner la poutre et les absorbeurs selon leurs faces supérieures en fonction de la localisation du besoin en place, par exemple si l'ajout d'un élément supplémentaire au sein de l'architecture du véhicule devait se faire sous ladite poutre.
De préférence, les absorbeurs 5 présentent à leur extrémité de jonction avec la poutre 3 une encoche 9 dans laquelle se loge ladite poutre 3. Comme illustré sur les figures 1 à 3, on voit qu'une partie ou avancée 11 de chaque absorbeur 5 va alors se superposer selon l'axe vertical à la poutre 3. Avantageusement, l'encoche 9 est configurée pour contenir la poutre 3. Ainsi, l'encoche 9 de l'absorbeur 5 est préférentiellement dimensionnée pour recevoir totalement la poutre 3 selon sa hauteur, de manière à ce que la poutre ne dépasse pas de l'absorbeur 5 vers le bas. Ainsi, leurs faces inférieures sont alignées verticalement. Avantageusement, l'encoche 9 de l'absorbeur 5 est dimensionnée pour recevoir totalement la poutre 3 selon sa largeur. Ainsi, la face avant de l'absorbeur 5 au niveau de son avancée 11 est alignée avec la face avant de la poutre 3 et pourra coopérer directement avec le pare-chocs en cas de collision. On comprend qu'ainsi la déformation de l'absorbeur 5 se fait alors sur toute sa hauteur alors même la poutre 3 à laquelle il est associé ne va lui transmettre des efforts que sur une portion de sa hauteur.

La poutre 3 se présente sous forme d'un profilé de section rectangulaire ou carré. A ce titre elle comprend une paroi inférieure 13, une paroi supérieure 15 et au moins une paroi verticale 17. Selon l'invention, la paroi inférieure 13 de la poutre 3 présente une résistance mécanique inférieure à celle de ses autres parois (15, 17) au moins au niveau de la zone de jonction entre la poutre 3 et les absorbeurs 5. Ainsi en cas de choc, la paroi inférieure 13 de la poutre 3 pourra se déformer.

Ceci permet d'obtenir plus de stabilité au niveau de la déformation de l'absorbeur 5 et en particulier de limiter les déversements éventuels selon l'axe vertical pouvant être générés par le décentrage de la poutre sur les absorbeurs.

L'obtention d'une résistance mécanique sur la paroi inférieure 13 qui est inférieure à celle des autres parois (15, 17) peut être obtenue de différentes façons. De manière préférentielle et comme illustré sur la figure 2, elle est obtenue par la présence d'une ouverture 19 pratiquée dans la paroi inférieure 13 de la poutre 3. Cette ouverture peut éventuellement être débouchante au niveau de l'extrémité de la poutre sur laquelle elle est pratiquée. La longueur et la largeur de l'ouverture seront déterminées sans peine par l'homme du métier en fonction de la déformation recherchée. A titre d'exemple non limitatif de l'invention, la taille d'une telle ouverture peut être de l'ordre 10 x 85 mm. On aura compris que l'ouverture 19 est située sur la poutre 3 de sorte à être placée en face de l'absorbeur auquel elle est associée. La poutre étant reliée à deux absorbeurs, sa face inférieure 13 présentera deux ouvertures sur sa face inférieure 13 symétriquement disposées selon un plan médian à la poutre telle que prise selon son orientation transversale.

Une autre possibilité pour obtenir un dispositif dont la poutre a une paroi inférieure moins résistante que ses autres parois est d'utiliser une poutre dons la paroi inférieure est moins épaisse que les autres parois. Cette variante de l'invention est alternative ou complémentaire à la précédente.

Selon un mode de réalisation préféré de l'invention illustré sur les figures 1 et 3, la poutre 3 présente de manière additionnelle ou alternative, au moins deux ouvertures pratiquées sur l'une des parois verticales 17 ou sur la paroi supérieure 15 de la poutre 3. De préférence ces ouvertures 21 sont plus petites que celles 19 situées sur la face inférieure 13 de la poutre 3 lorsque la poutre 3 présente également de telles ouvertures. A titre d'exemple non limitatif de l'invention la taille de ces ouvertures 21 sera de l'ordre de 10 x 50 mm. Ces ouvertures 21 sont symétriquement disposées de part et d'autre du centre de la poutre pris selon sa longueur, entre les absorbeurs 5. La présence de telles ouvertures 21 va contribuer à une meilleure stabilisation des absorbeurs 5 en cas de déformation et donc à une absorption optimale de l'énergie. En particulier, elles vont permettre de découpler en torsion la partie centrale de la poutre 3 et donc de limiter les perturbations liées aux dégalbage de la poutre 3. C'est pourquoi, les ouvertures 21 sont de préférence pratiquées à proximité des absorbeurs 5. Dans le cadre de l'invention, le fait que les ouvertures soient situés à proximité des absorbeurs signifie que la distance entre un absorbeur et le centre de l'ouverture qui située à proximité de lui est inférieure à la distance entre le milieu de la poutre pris selon sa longueur et le centre de ladite ouverture.

Enfin, de manière optionnelle, au moins une entaille 23 est pratiquée dans la paroi des absorbeurs, par exemple en regard des ouvertures 21 disposées entre les absorbeurs. Ces entailles contribuent à l'obtention d'une déformation homogène des absorbeurs 5.

## Revendications

1. Dispositif d'absorption de chocs (1) pour structure avant ou arrière de véhicule automobile comprenant une poutre de pare-chocs (3) aux extrémités de laquelle sont fixés des absorbeurs de chocs (5), ladite poutre de pare-chocs (3) présentant une hauteur inférieure à celle des absorbeurs de chocs (5), la poutre de pare-chocs (3) se présentant sous forme d'un profilé de section rectangulaire ou carrée incluant une paroi inférieure (13), une paroi supérieure (15) et au moins une paroi verticale (17), le dispositif (1) étant **caractérisé en ce que** la paroi inférieure (13) de la poutre de pare-chocs (3) présente une résistance mécanique inférieure à celle des autres parois (15, 17) au moins au niveau des absorbeurs de chocs (5).

2. Dispositif (1) selon la revendication 1, la poutre de pare-chocs (3) et les absorbeurs de chocs (5) comprenant chacun une face inférieure, le dispositif étant **caractérisé en ce que** la poutre de pare-chocs (3) et les absorbeurs de chocs (5) sont alignés selon l'axe vertical par leurs faces inférieures.

3. Dispositif (1) selon l'une des revendications 1 ou 2 **caractérisé en ce que** la hauteur de la poutre de pare-chocs (3) est de 0.5 à 0.8 fois la hauteur des absorbeurs de chocs (5).

4. Dispositif (1) selon l'une des revendications 1 à 3 **caractérisé en ce qu'**au moins un des absorbeurs de chocs (5) présente à une de ses extrémités une encoche (9) dans laquelle se loge la poutre de pare-chocs (3), ladite encoche (9) étant configurée pour que l'absorbeur de chocs (5) se superpose en partie à la poutre de pare-chocs (3) selon l'axe vertical.

5. Dispositif (1) selon la revendication 4 **caractérisé en ce que** l'encoche (9) est dimensionnée pour contenir la poutre de pare-chocs (3) de sorte à ce que l'absorbeur de chocs (5) se superpose en partie à la poutre de pare-chocs (3) selon l'axe vertical sur toute la largeur de la poutre de pare-chocs (3).

6. Dispositif (1) selon l'une des revendications 1 à 5 **caractérisé en ce que** la paroi inférieure (13) de la poutre de pare-chocs (3) présente une ouverture (19) au niveau des absorbeurs de chocs (5).

7. Dispositif (1) selon l'une des revendications 1 à 6 **caractérisé en ce que** la paroi inférieure (13) de la poutre de pare-chocs (3) présente une épaisseur inférieure à celle des autres parois (15, 17).

8. Dispositif (1) selon l'une des revendications 1 à 7, **caractérisé en ce que** la poutre de pare-chocs (3) présente deux ouvertures (21) symétriquement disposées de part et d'autre du centre de la poutre pris selon sa longueur, entre les absorbeurs de chocs (5) et pratiquées sur l'une des parois verticales (17) ou sur la paroi supérieure (15) de ladite poutre de pare-chocs (3), de préférence les ouvertures sont pratiquées à proximité des absorbeurs de chocs (5).

9. Véhicule automobile **caractérisé en ce qu'**il comprend au moins un dispositif d'absorption de chocs (1) selon l'une des revendications 1 à 8.

## Patentansprüche

1. Stoß absorbierende Vorrichtung (1) für Front- oder Heckstruktur eines Kraftfahrzeugs, die mindestens einen Stoßfängerbalken (3) umfasst, an dessen Enden Stoßdämpfer (5) befestigt sind, wobei der Stoßfängerbalken (3) eine Höhe aufweist, die kleiner ist als die der Stoßdämpfer (5), wobei der Stoßfängerbalken (3) die Form eines Profils mit rechteckigem oder quadratischem Querschnitt aufweist, das eine untere Wand (13), eine obere Wand (15) und mindestens eine vertikale Wand (17) aufweist, Vorrichtung (1) **dadurch gekennzeichnet, dass** die untere Wand (13) des Stoßfängerbalkens (3) eine mechanische Festigkeit aufweist, die mindestens im Bereich der Stoßdämpfer (5) kleiner ist als die der anderen Wände (15, 17).

2. Vorrichtung (1) nach Anspruch 1, wobei der Stoßfängerbalken (3) und die Stoßdämpfer (5) jeweils eine untere Fläche aufweisen, Vorrichtung **dadurch gekennzeichnet, dass** der Stoßfängerbalken (3) und die Stoßdämpfer (5) entlang der vertikalen Achse durch ihre unteren Flächen ausgerichtet sind.

3. Vorrichtung (1) nach einem der Ansprüche 1 oder 2, **dadurch gekennzeichnet, dass** die Höhe des Stoßfängerbalkens (3) 0,5 bis 0,8 Mal die Höhe der Stoßdämpfer (5) beträgt.

4. Vorrichtung (1) nach einem der Ansprüche 1 bis 3, **dadurch gekennzeichnet, dass** mindestens einer der Stoßdämpfer (5) an einem seiner Enden eine Kerbe (9) aufweist, in die sich der Stoßfängerbalken (3) fügt, wobei die Kerbe (9) konfiguriert ist, damit sich der Stoßdämpfer (5) zum Teil dem Stoßfängerbalken (3) entlang der vertikalen Achse überlagert.

5. Vorrichtung (1) nach Anspruch 4, **dadurch gekennzeichnet, dass** die Kerbe (9) bemessen ist, um den Stoßfängerbalken (3) derart zu enthalten, dass sich der Stoßdämpfer (5) zum Teil dem Stoßfängerbalken (3) entlang der vertikalen Achse auf der gesamten Länge des Stoßfängerbalkens (3) überlagert.

6. Vorrichtung (1) nach einem der Ansprüche 1 bis 5, **dadurch gekennzeichnet, dass** die untere Wand (13) des Stoßfängerbalkens (3) eine Öffnung (19) im Bereich der Stoßdämpfer (5) aufweist.

7. Vorrichtung (1) nach einem der Ansprüche 1 bis 6, **dadurch gekennzeichnet, dass** die untere Wand (13) des Stoßfängerbalkens (3) eine Stärke aufweist, die kleiner ist als die der anderen Wände (15, 17).

8. Vorrichtung (1) nach einem der Ansprüche 1 bis 7, **dadurch gekennzeichnet, dass** der Stoßfängerbalken (3) zwei Öffnungen (21) aufweist, die symmetrisch auf jeder Seite der Mitte des Balkens entlang seiner Länge genommen zwischen den Stoßdämpfern (5) angeordnet und auf einer der vertikalen Wände (17) oder auf der oberen Wand (15) des Stoßfängerbalkens (3) hergestellt sind, wobei die Öffnungen bevorzugt in der Nähe der Stoßfänger (5) hergestellt sind.

9. Kraftfahrzeug, **dadurch gekennzeichnet, dass** es mindestens eine Stoß absorbierende Vorrichtung (1) nach einem der Ansprüche 1 bis 8 umfasst.

## Claims

1. A shock absorber device (2) for front or rear structure of a motor vehicle including a bumper beam (3) at the ends of which shock absorbers (5) are attached, said bumper beam (3) having a height lower than that of the shock absorbers (5), the bumper beam (3) being in the form of a profile of rectangular or square cross-section including a lower wall (13), an upper wall (15) and at least one vertical wall (17), the device (1) being **characterized in that** the lower wall (13) of the bumper beam (3) has a mechanical resistance less than that of the other walls (15, 17) at least at the level of the shock absorbers (5).

2. The device (1) according to claim 1, the bumper beam (3) and the shock absorbers (5) each including a lower face, the device being **characterized in that** the bumper beam (3) and the shock absorbers (5) are aligned along the vertical axis by their lower faces.

3. The device (1) according to one of claims 1 or 2, **characterized in that** the height of the bumper beam (3) is 0.5 to 0.8 times the height of the shock absorbers (5).

4. The device (1) according to one of claims 1 to 3, **characterized in that** at least one of the shock absorbers (5) has at one of its ends a recess (9) in which the bumper beam (3) is housed, said recess (9) being configured such that the shock absorber (5) is superposed in part to the bumper beam (3) along the vertical axis.

5. The device (1) according to claim 4, **characterized in that** the recess (9) is dimensioned to contain the bumper beam (3) such that the shock absorber (5) is superposed in part to the bumper beam (3) along the vertical axis over the entire width of the bumper beam (3).

6. The device (1) according to one of claims 1 to 5, **characterized in that** the lower wall (13) of the bumper beam (3) has an opening (19) at the level of the shock absorbers (5).

7. The device (1) according to one of claims 1 to 6, **characterized in that** the lower wall (13) of the bumper beam (3) has a thickness smaller than that of the other walls (15, 17).

8. The device (1) according to one of claims 1 to 7, **characterized in that** the bumper beam (3) has two openings (21) symmetrically disposed on either side of the centre of the beam, taken along its length, between the shock absorbers (5) and formed on one of the vertical walls (17) or on the upper wall (15) of said bumper beam (3), preferably the openings are formed close to the shock absorbers (5).

9. A motor vehicle, **characterized in that** it includes a at least one shock absorber device (1) according to one of claims 1 to 8.
